# EUROPÄISCHE PATENTSCHRIFT

(11) **EP 3 452 251 B1**
(45) Veröffentlichungstag und Bekanntmachung des Hinweises auf die Patenterteilung: **13.04.2022**
(21) Anmeldenummer: 18702213.2
(22) Anmeldetag: 25.01.2018
(51) Int. Cl.: B23Q 5/40, B23Q 5/52, B23Q 5/58, B23Q 16/00, B23Q 17/00, F16H 25/20

(54) **WERKZEUGMASCHINE**
MACHINE TOOL
MACHINE-OUTIL

(30) Priorität: 07.02.2017 DE 102017102379
(43) Veröffentlichungstag der Anmeldung: 13.03.2019
(73) Patentinhaber: CHIRON Group SE, 78532 Tuttlingen (DE)
(72) Erfinder: EPPLER, Claus, 72469 Meßstetten (DE)
(74) Vertreter: Witte, Weller & Partner Patentanwälte mbB
(86) Internationale Anmeldenummer: PCT/EP2018/051887
(87) Internationale Veröffentlichungsnummer: WO 2018/145914

(56) Entgegenhaltungen:
- EP-A2- 0 472 778
- DE-A1- 10 050 617
- DE-A1- 19 930 434
- DE-A1-102010 049 677
- JP-A- S59 196 152
- US-A- 4 317 395

## Beschreibung

Die vorliegende Erfindung betrifft ein Verfahren zum Betreiben einer Maschine, insbesondere einer Werkzeugmaschine zum spanabhebenden Bearbeiten von Werkstücken, wobei die Maschine ein Maschinengestell, zumindest ein mittels einer fremdkraftbetätigten Antriebseinheit längs einer Bewegungsbahn bewegbares Bauteil, zumindest ein mit dem Maschinengestell verbundenes Gestellteil, das an einer Endposition in der Bewegungsbahn des Bauteils angeordnet ist, und zumindest einen ersten Anschlag aufweist, über den sich das in der Endposition befindliche Bauteil in Anlage mit dem Gestellteil befindet,

Derartige Maschinen sind aus dem Stand der Technik hinreichend bekannt.

Die Maschinen können als Werkzeugmaschinen ausgebildet sein oder auch als Montageeinrichtungen, Handhabungsvorrichtungen zum Beladen und Entladen von Werkstücken, Werkstückpalletten oder Werkzeugen dienen und beispielsweise den Werkzeugmaschinen zugeordnet sein. Diese Maschinen können als Portalmaschinen ausgebildet sein, an denen als Antriebseinheit eine motorisch angetriebene, vertikal ausgerichtete Kugelgewindespindel vorgesehen ist, die als Bauteil eine Greif- oder Transportvorrichtung in vertikaler Richtung bewegt, wobei die Greif- oder Transportvorrichtung über ein Portal in der horizontalen Ebene verfahren wird.

Derartige Werkzeugmaschinen sind beispielsweise als Portal- oder als Fahrständermaschinen ausgebildet, bei denen eine Werkzeugspindel vorgesehen ist, die an ihrem unteren oder vorderen Ende eine Aufnahme für Bearbeitungswerkzeuge aufweist. Die Werkzeugspindel ist beispielsweise in einem Spindelkopf gelagert, der vertikal verstellbar an einem Fahrständer oder Portal gelagert ist.

Ein Fahrständer wiederum ist in horizontaler Richtung verfahrbar auf einem Kreuzteil gelagert, das wiederum in einer zweiten horizontalen Richtung verfahrbar auf dem Maschinengestell angeordnet ist.

An dem Maschinengestell ist ferner unterhalb der Werkzeugspindel in einem Arbeitsraum ein Werkstücktisch angeordnet, auf den zu bearbeitende Werkstücke aufgespannt werden.

Auf diese Weise kann ein in die Aufnahme der Werkzeugspindel eingespanntes Bearbeitungswerkzeug in drei orthogonalen Richtungen relativ zu dem Werkstück verfahren werden, um übliche Bearbeitungsvorgänge wie Fräsen, Bohren, Gewindeschneiden etc. durchzuführen.

Bei anderen Werkzeugmaschinen sind nicht alle drei orthogonalen Achsen, die üblicherweise als x-, y- und z-Achse bezeichnet werden, in dem Bearbeitungswerkzeug angeordnet, sondern zumindest eine Achse ist in das Werkstück verlagert, so dass das Werkstück beispielsweise in x- und/oder y-Richtung relativ zu der Werkzeugspindel verfahren werden kann, die dann nur noch in der vertikalen z-Achse sowie ggf. in einer horizontalen Achse verfahren wird.

Bei Werkzeugmaschinen ist es auch üblich, die Werkzeugspindel nicht vertikal sondern horizontal ausgerichtet an einem Kreuzschlitten zu lagern.

Zum Verfahren des Spindelkopfes an dem Fahrständer sowie zum Verfahren des Fahrständers gegenüber dem Kreuzteil und zum Verfahren des Kreuzteiles gegenüber dem Maschinengestell werden Antriebseinheiten verwendet, die üblicherweise Lineardirektantriebe mit Ausgleichsgewichten oder Kugelgewindespindeln aufweisen, die über einen Motor, in der Regel einen Elektro- oder Schrittmotor, angetrieben werden. Derartige Antriebseinheiten finden auch in anderen Maschinen Anwendung, die Gegenstand der vorliegenden Erfindung sind.

In der Regel ist die Kugelgewindespindel über eine Kupplung mit einer Motornabe des Motors verbunden, wobei diese Kupplung extrem torsionssteif ausgebildet ist, damit die Drehschritte des Motors ohne Spiel in den Vorschub der Spindelmutter umgesetzt werden können.

Auf der Kugelgewindespindel sitzt eine Spindelmutter, die beim Drehen der Kugelgewindespindel in die eine oder in die andere Richtung längs der Kugelgewindespindel verfahren wird. Der Kugelgewindespindel ist in der Regel ein Glasmaßstab zugeordnet, der die Verstellung der Spindelmutter messtechnisch überwacht und an eine Maschinensteuerung meldet, die den Motor jeweils derart antreibt, also insbesondere eine entsprechende Anzahl von Umdrehungen vollführen lässt, dass die Spindelmutter auf der Kugelgewindespindel eine vorbestimmte Position einnimmt.

In der Regel ist der Motor ein Schrittmotor, der positionsgenau gesteuert werden kann, so dass über den Drehwinkel des Schrittmotors sowie die Steigung der Kugelgewindespindel die jeweilige Position der Spindelmutter genau bekannt ist und vorgegeben werden kann. Der Glasmaßstab dient dann der Kontrolle, ob die Spindelmutter die vorbestimmte Position auch eingenommen hat.

Mit der Spindelmutter sind nun der Kreuzschlitten, der Fahrständer, der Spindelkopf oder ein vergleichbares Bauteil verbunden, so dass beim Verfahren der Spindelmutter längs der Kugelgewindespindel das jeweilige Bauteil parallel zu der Kugelgewindespindel verfahren wird.

Als weiteres, über eine derartige Antriebeinheit bewegtes Bauteil kann beispielsweise ein Vorschubelement genannt werden, mit dem Werkstücke im Arbeitsraum positioniert werden.

Andere Antriebseinheiten dienen dazu, Bauteile der Werkzeugmaschinen zu verdrehen, wie es beispielsweise bei einem Drehtisch oder einer schwenkbaren Wiegenvorrichtung der Fall ist, die eine Werkstückspannvorrichtung, eine Werkstück- oder eine Werkzeugspindel tragen und um eine Achse schwenken kann.

Die Antriebseinheiten können elektrisch, hydraulisch oder pneumatisch betätigt werden, sind also fremdkraftbetätigt.

Alle derartigen Maschinen weisen ein Maschinengestell auf, an dem die fremdkraftbetätigte Antriebseinheit montiert und das Bauteil geeignet geführt ist, so dass es längs der Bewegungsbahn bewegt, also verfahren oder gedreht werden kann. Konstruktionsbedingt oder aus Sicherheitsgründen werden die Bauteile in der Regel zwischen zwei Endpositionen bewegt, an denen Gestellteile fest in der Bewegungsbahn angeordnet sind oder bei Bedarf in die Bewegungsbahn hineinbewegt werden.

Diese Gestellteile wirken so einer Bewegung des Bauteils über die Endposition hinaus entgegen. Zwischen dem Gestellteil und dem Bauteil ist in der Regel zumindest ein Anschlag vorgesehen, der als eine Art Puffer dient, um das Auffahren des Bauteils auf das Gestellteil abzudämpfen oder für einen Sicherheitsabstand zwischen Bauteil und Gestellteil zu sorgen.

Die vorliegende Erfindung ist bei sämtlichen derartigen Werkzeugmaschinen sowie bei anderen Maschinen wie den eingangs erwähnten Handhabungsvorrichtungen und Montageeinrichtungen einsetzbar, bei denen Bauteile wie beispielsweise Spindelköpfe, Drehtische, Wiegen, Greifer oder sonstige Komponenten mittels einer fremdkraftbetätigten Antriebseinheit längs einer linearen, kreisförmigen oder sonst gebogenen Bewegungsbahn verfahren werden.

Im Betrieb derartiger Maschinen treten immer wieder Situationen auf, in denen Maschinenteile, also Komponenten der Antriebseinheit oder Führungen der Bauteile bzw. Konstruktionselemente der Bauteile, durch Verschleiß, Materialermüdung oder Materialfehler ihre Festigkeit und/oder Steifigkeit verlieren, was zu Genauigkeitsproblemen im Betrieb der Maschine bis hin zu einem Bruch oder Abriss bestimmte Komponenten und damit einhergehenden Sicherheitsproblemen führen kann.

Besonders problematisch ist ein derartiger Bruch oder Abriss bei vertikal verlaufenden Antriebseinheiten, wie bspw. bei Kugelgewindespindeln oder Lineardirektantrieben, weil dies ein Gefahrenpotential darstellt, wenn dem Bediener der Maschine oder dem Service- bzw. Wartungspersonal Zugriff auf die Achse ermöglicht werden muss.

Aber auch bei horizontal verfahrenden Bauteilen kann ein solcher Bruch oder Abriss ein Problem darstellen, weil nämlich ein ggf. gerade beschleunigtes Bauteil dann ungebremst und nicht abbremsbar weiterfährt, was nicht nur ein Gefahrenpotential für Bedienungspersonal darstellt sondern auch die Gefahr birgt, dass Komponenten der Werkzeugmaschine beschädigt werden. Dies ist insbesondere dann der Fall, wenn die über die Antriebseinheit bewegten Bauteile hohe Massen aufweisen, die mit großer Beschleunigung bewegt werden, wie es im Hinblick auf eine schnelle Bearbeitung, Montage bzw. Beladung der Werkstücke bei allen genannten Maschinen der Fall ist.

Eine besondere Gefahr für das Bedienungspersonal besteht jedoch bei vertikalen Antriebseinheiten, die Bauteile wie beispielsweise den Spindelkopf vertikal bewegen.

Wenn die Antriebseinheit eine Kugelgewindespindel ist, ist neben einem Bruch der Kupplung, durch den die Kugelgewindespindel sozusagen den Kontakt zur Motornabe verliert, ein weiteres Gefahrenpotential dann gegeben, wenn die Kugelgewindespindel selbst bricht. In beiden Fällen ist der Motor nicht mehr in der Lage, die Kugelgewindespindel abzubremsen, so dass im laufenden Betrieb die Gefahr besteht, dass die bewegten Bauteile zu einer ernsthaften Beschädigung der Maschine führen, da sie nicht rechtzeitig abgebremst werden können.

Bei vertikal verfahrenden Bauteilen, also beispielsweise beim Spindelkopf, ist der Bruch der Kugelgewindespindel aber auch im Stillstand eine ernstzunehmende Gefahren für das Bedienungspersonal. Wenn während Rüst- oder Servicearbeiten die Kugelgewindespindel bricht, wird der Spindelkopf häufig nicht mehr gehalten und kann ungehindert nach unten fahren und dabei Personen verletzen, die im Arbeitsraum tätig sind.

Um diese Probleme zu beherrschen, werden die Bauteile bei eingeschalteter Maschine über den bestromten Motor gehalten, während bei ausgeschaltetem Motor die Antriebseinheit über eine Bremse festgehalten wird, die im Bereich des Motors vorgesehen ist.

Wenn jedoch die Kupplung oder die Kugelgewindespindel bricht, können weder ein bestromter Motor noch die Bremse ein willkürliches Verfahren der Bauteile verhindern.

Einem Versagen der Bremse wird durch regelmäßige Überprüfung der Bremse entgegengewirkt, indem sie beispielsweise dadurch zyklisch getestet wird, dass der Motor bei geschlossener Bremse angefahren wird. Sofern die Bremse "hält", wird dies daran erkannt, dass die Bauteil sich nicht bewegt, was mittels des bereits erwähnten Glasmaßstabes oder eines anderen geeigneten Sensors durch die Maschinensteuerung oder eine gesonderte Überwachungseinrichtung erkannt wird.

Problematisch sind jedoch das Brechen der Kupplung sowie das Brechen der Kugelgewindespindel selbst.

Um diesen Fehlern zu begegnen, werden bisher zusätzliche mechanische Elemente eingesetzt, die separat angeordnet sind und entweder unter Funktion der Maschinensteuerung oder von Hand bei Bedarf geklemmt werden, so dass das Bauteil nicht mehr auf seinen Führungsschienen verfahren kann, oder die Spindelmutter nicht mehr längs der Kugelgewindespindel bewegt werden kann.

Dabei ist es auch bekannt, zusätzliche Sicherungselemente wie beispielsweise einen Holzbalken unter den Spindelkopf zu stellen, wenn Wartungsarbeiten durchgeführt werden.

All diese Maßnahmen sind jedoch zum einen mit dem Problem behaftet, dass sie von dem Bedienungspersonal ggf. nicht angewendet werden, wenn eilige Eingriffe erforderlich sind, wobei sie zum anderen dann aufwändige Sicherheitselemente darstellen, wenn sie über die Maschinensteuerung selbst geschaltet werden. Hinzu kommt, dass diese Sicherungselemente auch wiederum überprüft werden müssen.

Aus dem DE 79 26 126 U1 ist eine vertikale gelagerte Kugelrollspindel für den Antrieb eines Hubwagens bekannt. Wird der Hubwagen entlastet, so wird die unten mit geringem Spiel gelagerte Kugelgewindespindel um dieses Spiel angehoben. Dadurch wird eine drehfest mit dem unteren Ende verbundene Scheibe gegen einen Anschlag gepresst und somit ein weiteres Verdrehen der Kugelgewindespindel verhindert. Bei einem Bruch der Kugelgewindespindel kann der Hubwagen schwerkraftbedingt absinken.

Das DE 79 26 847 U1 beschreibt die parallele Anordnung mehrerer zwangsgekoppelter Spindeln. Bei Bruch einer dieser Spindeln sind die verbleibenden Spindeln in der Lage, die Funktion zumindest vorübergehend sicherzustellen. Diese Konstruktion ist jedoch sehr aufwändig.

Die DE 29 18 641 A beschreibt einen Antrieb für einen Werkzeugspindelschlitten in einer Werkzeugmaschine, der zwei mechanisch parallel geschaltete Kugelgewindespindeln umfasst, von denen die beide angetrieben werden. Die erste Kugelgewindespindel ist nicht-selbsthemmend, die zweite selbsthemmend ausgebildet. Wenn der Antrieb außer Betrieb geht, verhindert die zweite Kugelgewindespindel ein ungewolltes Verdrehen der ersten Kugelgewindespindel. Auch diese Konstruktion ist konstruktiv sehr aufwändig.

Die US 5,581,220 A beschreibt eine Hubvorrichtung mit einer vertikalen Kugelgewindespindel. Im Bereich der Spindellagerung ist eine Bremsvorrichtung angeordnet, die der Drehung der Kugelgewindespindel entgegenwirkt und so das Absenken schwerer Lasten ermöglicht. Bei einem Bruch der Kugelgewindespindel ist diese Bremse funktionslos.

Die DE 199 30 434 A1 beschreibt ein Stellglied, bei dem ein Backen über einen Motor verfahren wird und in Endposition zunächst mit einem Dämpfer und dann mit einem Endanschlag in Anlage gelangt. Dieses Stellglied wird so betrieben, wie im Oberbegriff des vorliegenden Anspruchs 1 definiert.

Vor diesem Hintergrund liegt der vorliegenden Erfindung die Aufgabe zugrunde, ein Verfahren der eingangs genannten Art bereitzustellen, durch das die mögliche Beeinträchtigung von Bearbeitungsgenauigkeit und/oder Sicherheit auf konstruktiv einfache und sichere Weise schon vor einem Bruch oder Abriss eines Maschinenteils erkannt werden kann.

Erfindungsgemäß wird diese Aufgabe bei dem eingangs genannten Verfahren dadurch gelöst, dass eine Maschinensteuerung dazu ausgelegt ist, die Antriebseinheit derart anzusteuern, dass a) das Bauteil mittels der Antriebseinheit in die Endposition verfahren wird, wo es über den ersten Anschlag an dem Gestellteil anliegt, sowie b) über die Antriebseinheit auf das Bauteil weiterhin eine Kraft ausgeübt wird, die es in Richtung des Gestellteils drückt, und wobei die Maschinensteuerung weiter dazu ausgelegt ist, dass sie c) erfasst, ob eine weitere Bewegung des Bauteils und/oder in der Antriebseinheit erfolgt, und d) eine Fehlermeldung ausgibt, wenn in Schritt c) eine Bewegung erfasst wird.

Die Maschine kann dabei zumindest einen zweiten Anschlag aufweisen, der sich zumindest bei in der Endposition befindlichem Bauteil zwischen dem Bauteil und dem Gestellteil befindet, wobei die beiden Anschläge derart ausgebildet sind, dass das in Endposition befindliche Bauteil nur über den ersten der beiden Anschläge mit dem Gestellteil in Anlage ist, wobei der erste Anschlag vorzugsweise außerhalb der Bewegungsbahn liegt.

In einer einfachen Ausgestaltung weisen die beiden Anschläge in Richtung der Bewegungsbahn derartige Ausdehnungen auf, dass das in der Endposition befindliche Bauteil nur über den ersten Anschlag an dem Gestellteil anliegt.

Das neue Verfahren ermöglicht einen einfachen Test, ob bestimmte Maschinenteile durch Verschleiß, Materialermüdung, Materialfehler oder Vergleichbares ihre Festigkeit und/oder Steifigkeit so weit verloren haben, dass die Möglichkeit besteht, dass Genauigkeitsprobleme im Betrieb der Maschine und/oder Sicherheitsprobleme auftreten können.

Dazu wird das Bauteil mittels der Antriebseinheit in die Endposition verfahren, so dass es an dem ersten Anschlag anliegt, wenn der erste Anschlag an dem Gestellteil angeordnet ist, bzw. der erste Anschlag an dem Gestellteil anliegt, wenn er an dem Bauteil abgeordnet ist. In der Endposition liegt also das Bauteil zunächst über den ersten Anschlag an dem Gestellteil an.

Unter "Endposition" wird im Rahmen der vorliegenden Anmeldung die Position des Bauteils verstanden, die es einnimmt, wenn es so weit verfahren wird, dass es ohne weitere Kraftausübung über den ersten Anschlag an dem Gestellteil anliegt. Es handelt sich also um die Position des Bauteils, die es einnimmt, wenn weder ein Sicherheits- noch ein Genauigkeitsproblem vorliegt oder eintreten könnte.

Dann wird über die Antriebseinheit auf das Bauteil weiterhin eine Kraft ausgeübt wird, die es in Richtung des Gestellteils drückt.

Wenn von der Maschinensteuerung oder einer Überwachungseinrichtung, die gesondert vorgesehen oder als Teil der Maschinensteuerung ausgebildet sein kann, jetzt eine weitere, ungewollte Bewegung des Bauteils und/oder in der Antriebseinheit registriert wird, deutet das auf ein bestehendes oder möglicherweise bevorstehendes Genauigkeits- und/oder Sicherheitsproblem hin.

Eine "ungewollte Bewegung des Bauteils und/oder in der Antriebseinheit" bedeutet im Rahmen der vorliegenden Erfindung, dass sich aufgrund der durch die Antriebseinheit aufgebrachten Kraft entweder das über den ersten Anschlag an dem Gestellteil anliegende Bauteil verformt, verbiegt oder verwindet, was durch die beiden erfindungsgemäß ausgebildeten Anschläge ermöglicht wird, oder die Antriebseinheit eine innere Bewegung ausführt, also z.B. der Motor oder die Kugelgewindespindel sich noch um einen kleine Betrag verdrehen, oder ein Maschinenteil der Antriebseinheit noch eine Bewegung ausführt.

Derartige Verformungen, Verbiegungen, Verwindungen und Bewegungen sind nicht möglich, wenn alle von der Kraftausübung betroffenen Maschinenteile und die Verbindungen zwischen ihnen ihre für den ordnungsgemäßen und sicheren Betrieb der Maschine erforderliche Festigkeit und/oder Steifigkeit aufweisen, und daher "ungewollt".

Auch ein Bruch oder Abriss einer Kupplung, Welle oder Verbindung zwischen Maschinenteilen würde zu einer derartigen ungewollten "Bewegung des Bauteils und/oder in der Antriebseinheit" führen.

Wird eine solche ungewollte "Bewegung des Bauteils und/oder in der Antriebseinheit" erfasst, so liegt entweder bereits ein Genauigkeits- und/oder Sicherheitsproblem vor, oder es wird mit relevanter Wahrscheinlichkeit auftreten.

In einem solchen Fall wird eine Fehlermeldung ausgegeben, und das Bedienungspersonal kann die Fehlerquelle suchen und beheben.

Die Erfindung ermöglicht also das Testen aller Komponenten, die in einem aus Antriebseinheit, Bauteil, dessen Führungen, Gestellteil und Maschinengestell bestehenden geschlossenen Kreis belastet werden und versagen können. Dabei wird nicht nur ein bereits bestehendes Genauigkeits- und/oder Sicherheitsproblem erkannt, sondern bereits die Möglichkeit, dass ein derartiges Genauigkeits- und/oder Sicherheitsproblem bei weiterem Betrieb der Maschine auftreten kann.

Die Erfinder der vorliegenden Anmeldung haben erkannt, dass das oben für zwei z.B. unterschiedlich lange Anschläge beschriebene Verfahren auch durchgeführt werden kann, wenn sich nur ein Anschlag zwischen Gestellteil und Bauteil befindet.

Wenn dieser Anschlag mittig zu der Bewegungsbahn liegt, wie es im Stand der Technik üblich ist, können mit dem erfindungsgemäßen Verfahren ggf. keine Verwindungen oder Verformungen des Bauteils hervorgerufen werden, selbst wenn das Bauteil in sich "weich" geworden ist, weil der mittige Anschlag eben keine weitere Bewegung des Bauteils selbst zulässt.

Im Rahmen der vorliegenden Anmeldung wird unter einem "mittig zu der Bewegungsbahn" liegenden Anschlag eine Position des Anschlags verstanden, die in Richtung der Kraftausübung liegt, so dass das Bauteil sich nicht um den Anschlag herum oder an ihm vorbei verbiegen, verformen oder verwinden kann.

Bewegungen in der Antriebseinheit, also bspw. ein Verwinden, Verformen und Verbiegen oder ein Bruch bzw. Abriss einer Kupplung oder Welle können aber gleichwohl hervorgerufen und als potentielle Sicherheits- oder Genauigkeitsprobleme erkannt werden.

Bevorzugt ist es daher, wenn der erste Anschlag außerhalb der Bewegungsbahn, also außermittig sitzt, weil dann auch eine ungewollte Bewegung des Bauteils hervorgerufen und erkannt werden kann.

Im Rahmen der vorliegenden Anmeldung wird unter einem "außerhalb der Bewegungsbahn" liegenden Anschlag ein Position des Anschlags verstanden, die nicht in Richtung der Kraftausübung liegt, so dass das Bauteil sich um den Anschlag herum oder an ihm vorbei verbiegen, verformen oder verwinden kann, wenn es in Relation zu der durch die Antriebseinheit ausgeübten Kraft weich oder nachgiebig ist.

Bei linearen Bewegungsbahnen würden drei gleich lange und gleichmäßig um die Richtung der Kraftausübung herum verteilt angeordnete Anschläge ein ungewolltes Bewegen des Bauteils immer verhindern, wenn sie sich beispielsweise parallel zueinander in Richtung der Bewegungsbahn erstrecken.

Wenn bei einer linearen, also geraden Bewegungsbahn zwei Anschläge vorgesehen sind, weisen sie erfindungsgemäß eine unterschiedliche Länge auf, was bedeutet, dass sie in Richtung der Bewegungsbahn parallel zueinander verlaufen aber absolut unterschiedliche Längen aufweisen, so dass bei Annäherung des Bauteils an das Gestellteil das Bauteil zunächst nur über den ersten Anschlag in Anlage mit dem Gestellteil gelangt.

Wenn drei oder mehr Anschläge vorgesehen sind, ist erfindungsgemäß vorgesehen, dass ein Anschlag länger ist als alle anderen.

Bei kreisförmigen oder gebogenen Bewegungsbahnen oder bei schräg zu der Bewegungsbahn verlaufenden Gestellteilen kommt es dagegen nicht auf die absolute Länge der Anschläge an, sondern darauf, dass sie so positioniert und in ihrer Länge gewählt werden, dass bei Annäherung des Bauteils an das Gestellteil das Bauteil auch hier über den ersten Anschlag zuerst in Anlage mit dem Gestellteil gelangt.

Sowohl bei linearen als auch bei kreisförmigen oder gebogenen Bewegungsbahnen verbleibt bei in Endposition befindlichem Bauteil zwischen dem zweiten Anschlag oder den weiteren Anschlägen und dem Bauteil - oder dem Gestellteil - ein gewisser Spalt, der ein ungewolltes Bewegen des Bauteils ermöglicht, das Bauteil aber nach einen gewissen Maß an Verformung, Verwindung, Verbiegung oder ähnlichem abfängt.

Für die Grundidee der Erfindung ist also nur ein außerhalb der Bewegungsbahn angeordneter Anschlag erforderlich. Wenn zumindest ein zweiter Anschlag vorgesehen ist, erhöht er die Sicherheit, denn bei einer ungewollten Bewegung des Bauteils wird es angehalten, wenn der Abstand zwischen zweitem Anschlag und Bauteil bzw. Gestellteil überwunden wurde. Der Abstand wird dabei so gewählt, dass die dadurch zugelassene ungewollte Bewegung sicher erkannt werden kann.

Durch einfache konstruktive Maßnahmen und einfache Steuerungsmaßnahmen kann so bei einer gattungsgemäßen Maschine erkannt werden, ob ein Genauigkeit- und/oder Sicherheitsproblem bereits besteht oder mit einer gewissen Wahrscheinlichkeit auftreten kann.

Die der Erfindung zugrunde liegende Aufgabe wird auf diese Weise vollkommen gelöst.

Allgemein ist es bevorzugt, wenn zumindest ein Anschlag an dem Bauteil und/oder dem Gestellteil zugeordnet ist, wobei beide Anschläge auch an dem Bauteil oder dem Gestellteil angeordnet sein können.

Hier ist von Vorteil, dass je nach den baulichen Gegebenheiten der oder die Anschläge sinnvoll auf Bauteil und Gestellteil verteilt werden können, was einen konstruktiv einfachen Aufbau der Maschine ermöglicht.

Alternativ ist es bevorzugt, wenn zumindest ein Anschlag an einem Halter angeordnet ist, der in die Bewegungsbahn zwischen Bauteil und Gestellteil bewegbar ist.

Hier ist von Vorteil, dass das Gestellteil wahlweise in die Bewegungsbahn hineinbewegt werden kann, so dass die Endposition auf konstruktiv einfache Weise an geeigneten Positionen längs der Bewegungsbahn vorgesehen werden kann. Dies ermöglicht eine Überprüfung, ob ungewollte Bewegungen auftreten, ohne dass das Bauteil in die äußerste Position längs der Bewegungsbahn gefahren werden muss. Im Betrieb der Maschine kann so eine Endposition von Zeit zu Zeit eingefügt werden, um die Maschine auf potentielle Genauigkeits- und/oder Sicherheitsprobleme zu testen, ohne dass dafür so viel unproduktive Zeit benötigt wird, als wenn dazu jedes Mal die äußerste Endposition angefahren werden muss.

Wenn die Lage der Anschläge bekannt ist, kann die Maschinensteuerung das Bauteil unmittelbar in die Endposition fahren und dann mit dem Test auf potentielle Genauigkeits- und/oder Sicherheitsprobleme beginnen. Ist die Lage der Anschläge und/oder der Endpositionen unbekannt, fährt die die Maschinensteuerung das Bauteil zunächst im Schleichgang in Richtung der vermuteten Endposition, deren Erreichen durch Sensoren geeignet erfasst wird.

In einer Weiterbildung ist ein vorzugsweise dem ersten Anschlag zugeordneter Sensor vorgesehen ist, der erfasst, ob das Bauteil sich in seiner Endposition befindet, wobei vorzugsweise dem zweiten Anschlag ein Sensor zugeordnet ist, der eine Abstandsänderung zwischen dem Gestellteil und dem Bauteil erfasst.

Hier ist von Vorteil, dass ohne Eingriffe in die Maschinesteuerung mit Hilfe von zwei Sensoren ungewollte Bewegungen des Bauteils auf einfache Weise erkannt werden können.

Weiterhin ist es bevorzugt, wenn die Antriebseinheit einen Motor, vorzugsweise einen Elektro- oder Schrittmotor, aufweist, der derart mit dem Bauteil gekoppelt ist, dass beim Drehen des Motors das Bauteil längs der Bewegungsbahn verfahren wird, und wobei eine Überwachungsvorrichtung vorgesehen ist, die die Drehung des Motors und/oder die Bewegung des Bauteils erfasst, wobei vorzugsweise das Bauteil über das Drehen des Motors eine Drehbewegung längs einer kreisförmigen Bewegungsbahn ausübt, und weiter vorzugsweise die Antriebseinheit eine von dem Motor angetriebene Kugelgewindespindel aufweist, auf der eine Spindelmutter sitzt, die mit dem Bauteil derart verbunden ist, dass das Bauteil beim Verdrehen der Kugelgewindespindel mittels des Motors längs der Kugelgewindespindel einer linearen Bewegungsbahn folgt.

Diese Maßnahmen schaffen eine Werkzeugmaschine, bei der die Überprüfung, ob ein tatsächliches oder potentielles Genauigkeits- oder Sicherheitsproblem besteht, besonders wichtig ist.

Weiter ist es von Vorteil, wenn die Überwachungseinrichtung die Drehung der Kugelgewindespindel erfasst, vorzugsweise die Kugelgewindespindel mit ihrer Drehachse vertikal ausgerichtet ist und das Bauteil vertikal nach oben oder unten verfahren wird, und weiter vorzugsweise das Bauteil eine vertikal ausgerichtete Werkzeugspindel mit einer Spindelaufnahme zum Einspannen eines Bearbeitungswerkzeugs umfasst, wobei die Kugelgewindespindel weiter vorzugsweisevertikal unterhalb des Motors angeordnet ist.

Auch diese Maßnahmen schaffen eine Werkzeugmaschine, bei der die Überprüfung, ob ein tatsächliches oder potentielles Genauigkeits- oder Sicherheitsproblem besteht, besonders wichtig ist.

Ausführungsbeispiele der Erfindung sind in der Zeichnung dargestellt und werden in der nachfolgenden Beschreibung näher erläutert. Es zeigen:
- Fig. 1: in schematischer Seitenansicht, eine vereinfachte Darstellung einer Werkzeugmaschine, auf der das neue Verfahren durchgeführt wird;
- Fig. 2: eine schematische Darstellung einer Antriebseinheit für ein einer linearen Bewegungsbahn folgendes Bauteil der Werkzeugmaschine aus Fig. 1, die zwischen dem Bauteil und einem Gestellteil zwei Anschläge aufweist, die an dem Gestellteil sitzen;
- Fig. 3: eine Darstellung wie in Fig. 2, wobei nur ein Anschlag vorgesehen ist, der an dem Bauteil sitzen;
- Fig. 4: eine Darstellung wie in Fig. 2, wobei beide Anschläge an dem Gestellteil sitzen;
- Fig. 5: eine Darstellung wie in Fig. 2, wobei ein Anschlag an dem Bauteil und ein Anschlag an dem Gestellteil sitzt; und
- Fig. 6: eine Darstellung ähnlich wie in Fig. 2, wobei das Bauteil einer kreisförmigen Bewegungsbahn folgt.

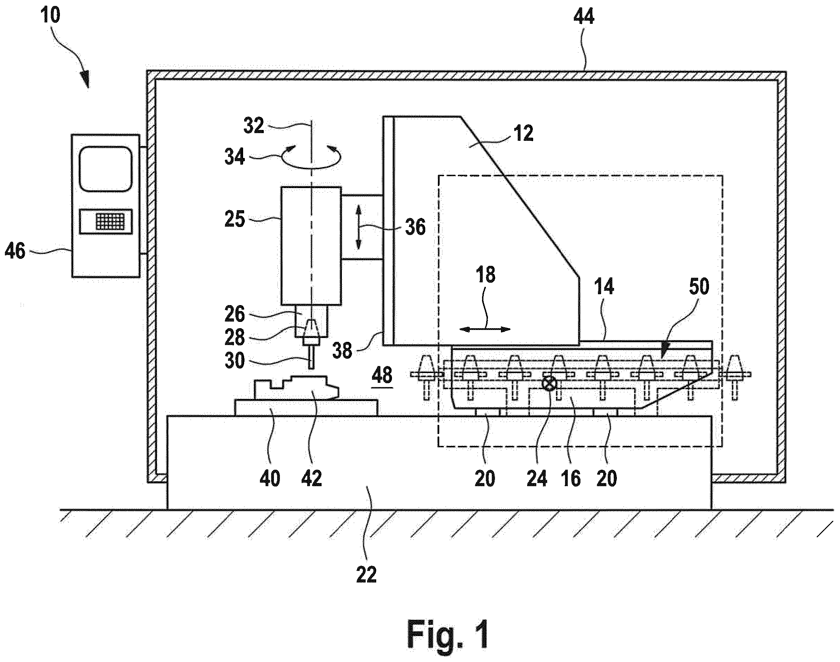

In Fig. 1 ist in einer schematischen und nicht maßstabsgetreuen Seitenansicht eine Werkzeugmaschine dargestellt, die in ihrer Gesamtheit mit der Bezugsziffer 10 bezeichnet ist.

Die Werkzeugmaschine 10 besitzt einen Fahrständer 12, der über eine erste Schlittenführung 14 auf einem Kreuzteil 16 angeordnet ist. Der Fahrständer 12 kann mit Hilfe der ersten Schlittenführung 14 auf dem Kreuzteil 16 in Richtung einer Achse verfahren werden, die üblicherweise als y- Achse bezeichnet wird und hier mit einem Pfeil 18 symbolisch dargestellt ist. Es versteht sich, dass der Fahrständer 12 auf der ersten Schlittenführung 14 motorisch verfahren wird, wobei eine entsprechende Antriebseinheit hier aus Gründen der Übersichtlichkeit nicht dargestellt ist.

Das Kreuzteil 16 ist über eine zweite Schlittenführung 20 auf einem Maschinengestell 22 gelagert. Die zweite Schlittenführung 20 ermöglicht eine Bewegung des Kreuzteils 16 entlang einer zweiten Achse, die hier bei der Bezugsziffer 24 dargestellt ist. Die Bezugsziffer 24 bezeichnet die so genannte X-Achse. Es versteht sich, dass auch die Bewegung des Kreuzteils 16 auf der zweiten Schlittenführung 20 mit Hilfe einer geeigneten Antriebseinheit erfolgt, die hier aus Gründen der Übersichtlichkeit nicht dargestellt ist.

An dem Fahrständer 12 ist ein Spindelkopf 25 mit einer darin drehbar gelagerten Werkzeugspindel 26 vertikal hängend gelagert. Die Werkzeugspindel 26 besitzt an ihrem unteren Ende eine Spindelaufnahme 28, in die in bekannter Weise ein Werkzughalter 29 mit einem daran befestigten Bearbeitungswerkzeug 30 eingespannt werden kann. Typischerweise ist der Werkzeughalter standardisiert und vom Steilkegel (SK)- oder Hohlschaftkegel (HSK)-Typ. Die Werkzeugspindel 26 ist dazu ausgebildet, das Bearbeitungswerkzeug 30 um ihre Spindelachse 32 zu rotieren, was mit einem Pfeil 34 dargestellt ist. Typischerweise ist die Werkzeugspindel 26 in der Lage, das Bearbeitungswerkzeug 30 mit mehreren tausend Umdrehungen pro Minute zu rotieren, um insbesondere eine Bohr- und Fräsbearbeitung von metallischen Werkstücken zu ermöglichen.

Die Werkzeugspindel 26 kann an dem Fahrständer 12 in Richtung eines Pfeils 36, hier also in vertikaler Richtung, mittels einer ebenfalls nicht gezeigten Antriebseinheit verfahren werden, die als Kugelgewindespindel oder Lineardirektantrieb ausgebildet sein kann. Dementsprechend ist die Werkzeugspindel 26 über eine dritte Schlittenführung 38 an dem Fahrständer 12 gelagert. Die Bewegung der Werkzeugspindel 26 in Richtung des Pfeils 36 wird üblicherweise als Z-Achse bezeichnet. Typischerweise verlaufen die drei Schlittenführungen 14, 20 und 38 für die drei Bewegungsachsen 18, 24, 36 orthogonal zueinander.

Die Werkzeugmaschine 10 ist also eine Fahrständermaschine mit vertikaler Werkzeugspindel 26 bei der alle drei Bewegungsachsen 18, 24, 36 in dem Bearbeitungswerkzeug 30 realisiert sind.

Mit der Bezugsziffer 40 ist ein auf dem Maschinengestell gelagerter Werkstücktisch bezeichnet, auf dem ein zu bearbeitendes Werkstück 42 aufgespannt ist. Die Bezugsziffer 44 bezeichnet ein Gehäuse, das die bislang beschriebenen Komponenten der Werkzeugmaschine 10 einschließt. Mit der Bezugsziffer 46 ist schließlich eine Maschinensteuerung bezeichnet, mit deren Hilfe sämtliche Bewegungen der Werkzeugmaschine 10 sowie Hilfsaggregate (Kühlmittelzufuhr, Druckluft sowie das nachfolgend beschriebene Werkzeugmagazin) gesteuert werden.

Auf diese Weise kann das Bearbeitungswerkzeug 30 in einem mit 48 bezeichneten Arbeitstraum verfahren werden, um dort das Werkstück 42 zu bearbeiten.

Während dieser Bearbeitung kommen unterschiedliche Bearbeitungswerkzeuge 30 zum Einsatz, die in einem in Fig. 1 nur sehr schematisch dargestellten Werkzeugmagazin 50 vorrätig gehalten werden.

Zum Werkzeugwechsel fährt der Fahrständer in y-Richtung 18 nach hinten, in Fig. 1 also nach rechts. Die Werkzeugspindel 26 befindet sich jetzt oberhalb des Werkzeugmagazins 50, in dem ein Leerplatz vorgesehen ist, in den die Werkzeugspindel 26 nun den Werkzeughalter 29 mit dem bisher im Einsatz gewesenen Bearbeitungswerkzeug 30 ablegt. Dann verfährt das Werkzeugmagazin 50 einen bestückten Magazinplatz in die Übergabeposition unter die Werkzeugspindel 26, in dem sich ein Werkzeughalter 29 mit einem jetzt zum Einsatz vorgesehenen Bearbeitungswerkzeug 30 befindet. Diese Art des Werkzeugwechsels wird als Pick-up-Verfahren bezeichnet.

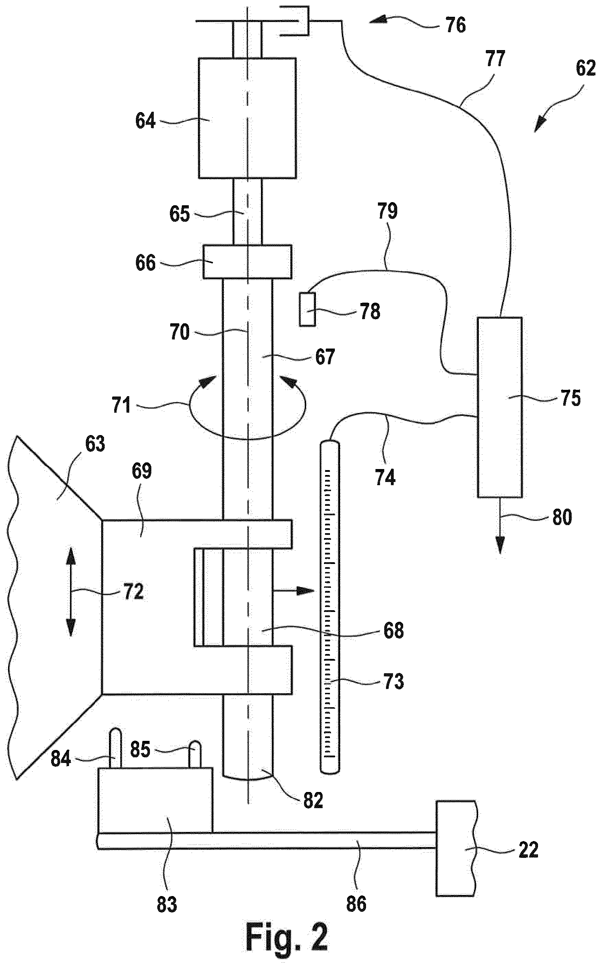

Die Fig. 2 zeigt eine Antriebseinheit 62 für ein Bauelement 63 der Werkzeugmaschine 10 aus Fig. 1.

Das Bauelement 63 kann beispielsweise der Spindelkopf 25 sein, so dass die Antriebseinheit 62 vertikal ausgerichtet ist. Es ist aber auch möglich, die Antriebseinheit 62 für das Kreuzteil 16 oder den Fahrständer 12 zu verwenden, dann ist die Antriebseinheit 62 horizontal ausgerichtet.

Die Antriebseinheit 62 umfasst einen Motor 64, der im gezeigten Beispiel ein Schrittmotor ist, der elektrisch mit Steuersignalen von der Maschinensteuerung 46 versorgt und angetrieben wird.

Der Motor 64 weist eine Motornabe 65 auf, die über eine torsionssteife Kupplung 66 mit einer vertikal unterhalb des Motors 64 liegenden Kugelgewindespindel 67 verbunden ist, auf der eine Spindelmutter 68 angeordnet ist.

Die Spindelmutter 68 ist über ein Verbindungsteil 69 mit dem Bauteil 63 verbunden.

Kugelgewindespindel 67 sowie Motornabe 65 sind koaxial zueinander ausgerichtet und weisen eine vertikal ausgerichtete Drehachse 70 auf, so dass der Motor 64 über die Kupplung 66 die Kugelgewindespindel 67 gemäß einem Pfeil 71 im und gegen den Uhrzeigersinn verdrehen kann.

Bei dieser Drehung der Kugelgewindespindel 67 wird die Spindelmutter 68 und somit das Bauelement 63 längs einer linearen Bewegungsbahn 72 nach oben, also auf den Motor 64 zu und damit gegen die Schwerkraft, oder nach unten und damit von dem Motor 64 weg, und somit in Richtung der Schwerkraft, verfahren.

Da die Kupplung 66 torsionssteif ist, folgt die Kugelgewindespindel 67 spielfrei den Umdrehungen der Motornabe 65. Dadurch wird eine Bewegung der Spindelmutter 68 verursacht, die durch die Steigung der Kugelgewindespindel 67 bestimmt wird. Die Verstellwege der Spindelmutter 68 längs der Kugelgewindespindel 67 werden mit Hilfe eines Sensors 73 überwacht, der hier als ein angedeuteter Glasmaßstab ausgebildet ist. Der Sensor 73 ist über eine Leitung 74 mit einer Überwachungseinrichtung 75 verbunden, die Teil der Maschinensteuerung 46 sein kann.

Ein Sensor 76 erfasst die Drehung der Motornabe 65 und damit die Drehung des Motors 64. Der Sensor 76 ist über eine Leitung 77 mit der Überwachungseinrichtung 75 verbunden.

Ein weiterer Sensor 78 erfasst die Drehung der Kugelgewindespindel 67. Der Sensor 78 ist über eine Leitung 79 mit der Überwachungseinrichtung 75 verbunden.

Aus den Signalen der Sensoren 73, 76, 78 ermittelt die Überwachungseinrichtung 75, ob die Drehung von Motor 64, Kugelgewindespindel 67 und Bauteil 63 zueinander stimmig sind, also die tatsächliche Bewegung des Bauteils 63 längs der Bewegungsbahn 72 mit der über die Steigung der Kugelgewindespindel 67 durch die Drehung des Motors 64 vorgegebenen Bewegung übereinstimmt.

Ist dies nicht der Fall, kann z.B. die Kupplung 66 oder die Kugelgewindespindel 67 gebrochen sein. Die Überwachungseinrichtung 75 gibt dann ein Fehlermeldung 80 aus.

Am unteren Ende 82 der Kugelgewindespindel 67 ist ein mit dem Maschinengestell 22 verbundenes Gestellteil 83 vorgesehen, an dem ein erster Anschlag 84 und ein zweiter Anschlag 85 angeordnet sind. Das Gestellteil 83 kann fest mit dem Maschinengestell 22 verbunden sein oder an einem Halter 86 angeordnet sein, der bei Bedarf in die Bewegungsbahn 72 geschwenkt wird.

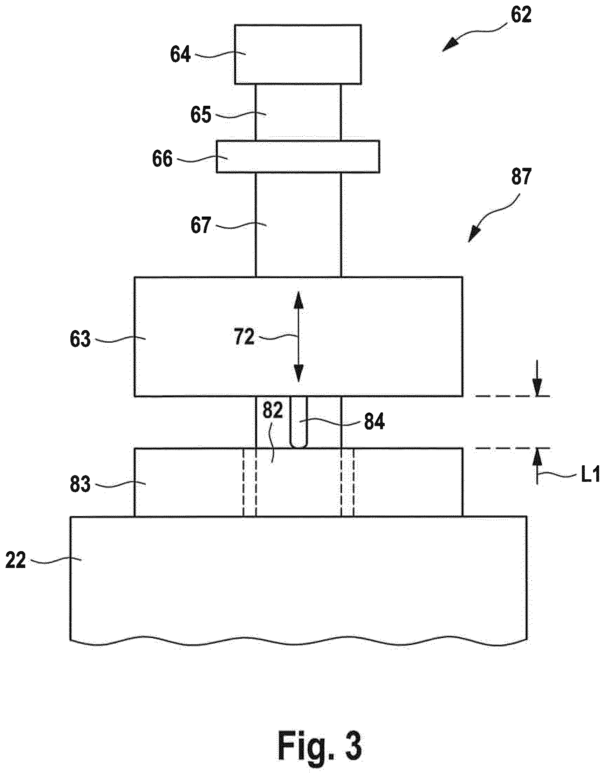

Auf diese Weise wird eine Endposition für die Bewegung des Bauteils 63 längs der Bewegungsbahn 72 definiert, wie dies schematisch anhand von Fig. 3 erläutert wird, in der sich das Bauteil 63 in seiner Endposition befindet.

Die Werkzeugmaschine ist nur ein Beispiel für eine Maschine, in der die Erfindung eingesetzt werden kann. Beispielsweise kann die Maschine als Werkzeugmaschine mit einer horizontalen Werkzeugspindel oder ohne Werkzeugmagazin ausgebildet sein, oder eine Handhabungsmaschine, Bohrmaschine, Presse oder ähnliches ein.

Wichtig ist nur, dass die Maschine 10 ein Maschinengestell 22, ein mittels einer fremdkraftbetätigten Antriebseinheit 62 längs einer Bewegungsbahn 72 bewegbares Bauteil 63 , ein mit dem Maschinengestell 22 verbundenes Gestellteil 83, das an einer Endposition in der Bewegungsbahn 72 des Bauteils 63 angeordnet ist, und einen ersten Anschlag 84 aufweist, über den sich das in der Endposition befindliche Bauteil 63 in Anlage mit dem Gestellteil 83 befindet, und der in einer Ausgestaltung außerhalb der Bewegungsbahn 72 liegt, wie es prinzipiell in Fig. 2 gezeigt ist.

Fig. 3 zeigt das Bauteil 63 aus Fig. 2 in seiner Endposition 87, in der der hier der an dem Bauteil 63 angeordnete erste Anschlag 84 an dem Gestellteil 83 anliegt, sodass das Bauteil 63 zu dem Gestellteil 83 eine Abstand aufweist, der der Länge L1 entspricht, die der erste Anschlag 84 in Richtung der Bewegungsbahn 72 aufweist.

Der erste Anschlag 84 ist hier abweichend von dem Ausführungsbeispiel der Fig. 2 nicht nur an dem Bauteil 63 angeordnet, er ist dort auch koaxial zu der Bewegungsbahn 72 angeordnet. Das untere Ende 82 der Kugelgewindespindel 67 ist hier in dem mit dem Maschinengestell 22 verbundenen Gestellteil 83 gelagert.

Die Bewegungsbahn 72 des Bauteils ist in Fig. 3 koaxial in der Kugelgewindespindel 67 gezeigt, also zentrisch zu dem Angriffspunkt, an dem die Kraft auf das Bauteil ausgeübt wird, die es längs der Bewegungsbahn 72 verschiebt. Da der erste Anschlag 84 mittig zu der Bewegungsbahn 72 liegt, kann sich das Bauteil 63 nicht weiter bewegen, also nicht um den Anschlag 84 herum oder an ihm vorbei verbiegen, verformen oder verwinden, wenn es durch die Antriebseinheit 62 weiterhin auf den Anschlag 84 gedrückt würde.

Wenn der Motor 64 in der Situation der Fig. 3 weiterhin bestromt wird, müssen jedoch Motornabe 65, Kupplung 66 und Kugelgewindespindel 67 der von dem Motor 64 über diese Maschinenteile auf das Bauteil 63 ausgeübten Kraft standhalten, denn das Bauteil kann sich in Fig. 3 nicht weiter nach unten bewegen. Sollte eines dieser Maschinenteile brechen, sich verwinden verformen oder verbiegen, würde diese ungewollte Bewegung in der Antriebseinheit 62 durch die in Fig. 2 gezeigten Sensoren 73, 76, 78 erfasst und in der Überwachungseinrichtung 75 als Fehler erkannt und eine Fehlermeldung 80 ausgegeben.

Wenn sich das Bauteil 63 in der Endposition 87 befindet, ermöglicht die weitere Kraftausübung durch den Motor 64 also einen einfachen Test, ob Maschinenteile der Antriebseinheit 62 durch Verschleiß, Materialermüdung, Materialfehler oder Vergleichbares ihre Festigkeit und/oder Steifigkeit so weit verloren haben, dass die Möglichkeit besteht, dass Genauigkeitsprobleme im Betrieb der Maschine und/oder Sicherheitsprobleme auftreten können.

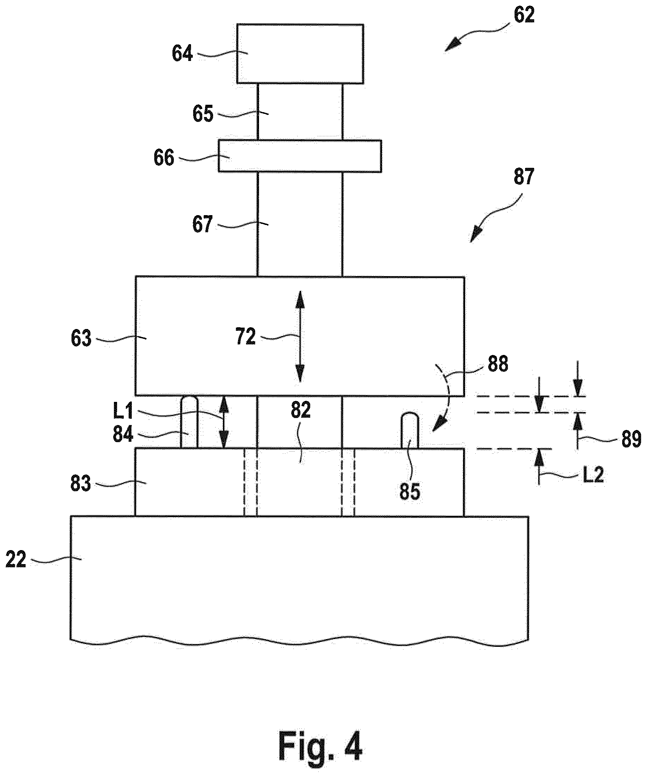

Wenn der Anschlag 84 außerhalb der Bewegungsbahn 72 liegt, wie es in Fig. 4 der Fall ist, kann bei weiterer Bestromung des Motors 64 zusätzlich auch eine ungewollte Bewegung des Bauteils 63 hervorgerufen und erkannt werden. In Fig. 4 sind beide Anschläge 84, 85 an dem Gestellteil 83 angeordnet.

Weil der Anschlag 84 nicht in Richtung der Kraftausübung liegt, kann sich das Bauteil 63 um den Anschlag 84 herum oder an ihm vorbei verbiegen, verformen oder verwinden, wenn es in Relation zu der durch die Antriebseinheit 62 ausgeübten Kraft weich oder nachgiebig ist.

Diese ungewollten Bewegung des Bauteils 63, die in Fig. 4 durch einen gestrichelten Pfeil 88 angedeutet ist, kann ebenfalls durch die Sensoren 73, 76, 78 erfasst und in der Überwachungseinrichtung 75 als Fehler erkannt werden woraufhin eine Fehlermeldung 80 ausgegeben würde.

Als Sicherheitsvorkehrung ist der zweite Anschlag 85 vorgesehen, der in Richtung der Bewegungsbahn 72 einen Abstand 89 zu dem Bauteil 63 aufweist, wenn der erste Anschlag 84 bereits an dem Bauteil 63 anliegt, so dass sich das Bauteil 63 bei eine rungewollten Bewegung noch um den Abstand 89 verbiegen kann, bevor es durch den zweiten Anschlag 85 abgefangen wird.

Der erste Anschlag 84 weis in Richtung der Bewegungsbahn 72 wieder die Länge L1 auf, während der zweite Anschlag 85 in Richtung der Bewegungsbahn die Länge L2 aufweist, die um den Abstand 89 geringer ist als die Länge L1.

Der zweite Anschlag 85 liegt in dem Ausführungsbeispiel der Fig. 4 ebenfalls außerhalb der Bewegungsbahn 72, er könnte aber auch mittig angeordnet sein.

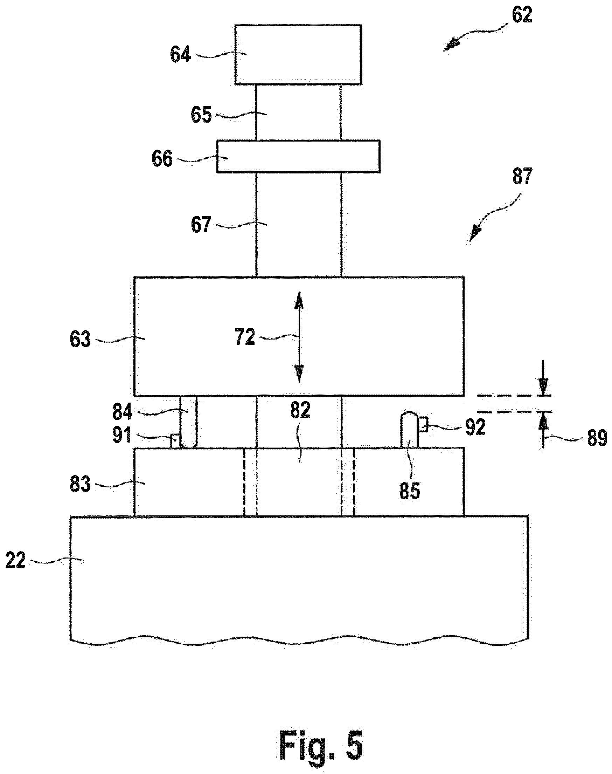

Um die Erkennung einer ungewollten Bewegung weiter zu verbessern oder eine alternative Erkennungsmöglichkeit vorzusehen, ist gemäß dem Ausführungsbeispiel der Fig. 5 an dem ersten Anschlag 84 ein Sensor 91 angeordnet, der erfasst, ob das Bauteil 63 seine Endposition 87 erreicht hat, also über den Anschlag 84 an dem Gestellteil 83 anliegt. Der Sensor 91 kann ein einfacher Endschalter sein. Er ist über eine nicht dargestellte Leitung mit der Überwachungseinrichtung 75 verbunden.

An dem zweiten Anschlag 85 ist ein Sensor 92 angeordnet, der den Abstand 89 zwischen dem Bauteil 63 und dem Anschlag 85 und dessen Verringerung im Falle einer ungewollten Bewegung des Bauteils 63 erfasst. Der Sensor 92 kann ein einfacher Abstandssensor sein. Er ist über eine nicht dargestellte Leitung mit der Überwachungseinrichtung 75 verbunden.

In dem Ausführungsbeispiel der Fig. 5 ist der erste Anschlag 84 an dem Bauteil 63 und der zweite Anschlag 85 an dem Gestellteil 83 angeordnet.

Anhand der Signale der Sensoren 91, 92 erkennt die Überwachungseinheit 75, wenn sich ein Endposition 87 befindliches Bauteil 63 ungewollt weiterbewegt, verformt, verbiegt, verwindet etc. und gibt die Fehlermeldung 80 aus.

Während in dem Ausführungsbeispiel der Fig. 4 beide Anschläge 84, 85 an dem Gestellteil 83 angeordnet sind, können sie auch beide an dem Bauteil 63 vorgesehen sein.

Zusätzlich zu der ungewollten Bewegung des Bauteils kann über die Sensoren 73, 76, 78, die in Fig. 2 gezeigt sind, auch in den Ausführungsbeispielen der Fig. 4 und 5 eine ungewollte Bewegung in der Antriebseinheit 62 erkannt werden, wie dies im Zusammenhang mit der Fig. 3 oben bereits beschrieben wurde.

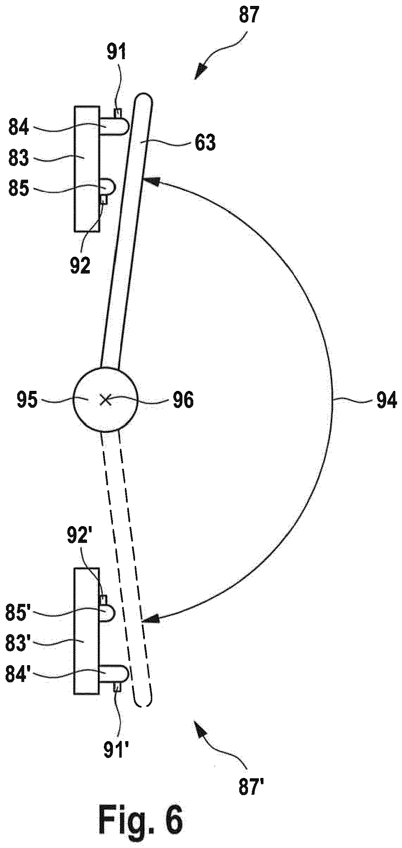

Während das Bauteil 13 in den Ausführungsbeispielen der Fig. 2 bis 5 einer linearen Bewegungsbahn 72 folgt, bewegt es sich in dem Ausführungsbeispiel der Fig. 6 auf einer kreisförmigen Bewegungsbahn 94.

Das Bauteil 63 ist mit einem Drehantrieb 95 verbunden, der es längs der Bewegungsbahn 94 um eine Drehachse 96 zwischen zwei Gestellteilen 83, 83' hin und her bewegt, die Endpositionen 87, 87' definieren.

An den Gestellteilen 83, 83' sind erste und zweite Anschläge 84, 85 und 84', 85' angeordnet, die dem Bauteil 63 zugewandt sind. Der erste Anschlag 84, 84' weist wieder die Länge L1 und der zweite Anschlag 85 die Länge L2 auf, so dass das in Endposition 87, 87' befindliche Bauteil 13 über den Anschlag 84, 84' an dem Gestellteil 83, 83' anliegt.

An dem ersten Anschlag 84, 84' ist wieder der Sensor 91, 91' und an dem zweiten Anschlag 85, 85' der Sensor 92, 92' angeordnet.

Wird zum Testen, ob ein Genauigkeits- oder Sicherheitsproblem vorliegt oder auftreten kann, der Drehantrieb 95 so angesteuert, dass er das in Endposition 87, 87' befindliche Bauteil 63 weiter gegen das Gestellteil 83, 83' drückt, so kann eine ungewollte Bewegung des Bauteils 63 wie in dem Ausführungsbeispiel der Fig. 5 anhand der Signale des Sensors 92 erkannt werden.

## Patentansprüche

1. Verfahren zum Betreiben einer Maschine, insbesondere einer Werkzeugmaschine (10) zum spanabhebenden Bearbeiten von Werkstücken (42), wobei die Maschine ein Maschinengestell (22), zumindest ein mittels einer fremdkraftbetätigten Antriebseinheit (62) längs einer Bewegungsbahn (72, 94) verfahrbares Bauteil (63), zumindest ein mit dem Maschinengestell (22) verbundenes Gestellteil (83, 83'), das an einer Endposition (87, 87') in der Bewegungsbahn (72, 94) des Bauteils (63) angeordnet ist, und zumindest einen ersten Anschlag (84) aufweist, über den sich das in der Endposition (87, 87') befindliche Bauteil (63) in Anlage mit dem Gestellteil (22) befindet,
wobei eine Maschinensteuerung (46) dazu ausgelegt ist, die Antriebseinheit (62) derart anzusteuern, dass
a) das Bauteil (63) mittels der Antriebseinheit (62) in die Endposition (87, 87') verfahren wird, wo es über den ersten Anschlag (84) an dem Gestellteil (83, 83') anliegt, **dadurch gekennzeichnet, dass**
b) über die Antriebseinheit (62) auf das Bauteil (63) weiterhin eine Kraft ausgeübt wird, die es in Richtung des Gestellteils (83, 83') drückt,
und dass die Maschinensteuerung (46) weiter dazu ausgelegt ist, dass sie
c) erfasst, ob eine weitere Bewegung des Bauteils (63) und/oder in der Antriebseinheit (62) erfolgt, und
d) eine Fehlermeldung (80) ausgibt, wenn in Schritt c) eine Bewegung erfasst wird.

2. Verfahren nach Anspruch 1, **dadurch gekennzeichnet, dass** die Maschine zumindest einen zweiten Anschlag (85) aufweist, der sich zumindest bei in der Endposition (87,87') befindlichem Bauteil (63) zwischen dem Bauteil (63) und dem Gestellteil (83, 83') befindet, und dass die beiden Anschläge (84, 85) derart ausgebildet sind, dass das in Endposition (87, 87') befindliche Bauteil (63) nur über den ersten (84) der beiden Anschläge (84, 85) mit dem Gestellteil (83, 83') in Anlage ist.

3. Verfahren nach Anspruch 1 oder 2, **dadurch gekennzeichnet, dass** der erste Anschlag (84) außerhalb der Bewegungsbahn (72, 94) liegt.

4. Verfahren nach einem der Ansprüche 1 bis 3, **dadurch gekennzeichnet, dass** zumindest ein Anschlag (84, 85) an dem Bauteil (63) angeordnet ist.

5. Verfahren nach einem der Ansprüche 1 bis 3, **dadurch gekennzeichnet, dass** zumindest ein Anschlag (84, 85) an dem Gestellteil (83, 83') angeordnet ist.

6. Verfahren nach Anspruch 2 oder 3, **dadurch gekennzeichnet, dass** beide Anschläge (84, 85) an dem Bauteil (63) oder dem Gestellteil (83, 83') angeordnet sind.

7. Verfahren nach einem der Ansprüche 1 bis 3, **dadurch gekennzeichnet, dass** zumindest ein Anschlag (84, 85) an einem Halter (86) angeordnet ist, der in die Bewegungsbahn (72, 94) zwischen Bauteil (63) und Gestellteil (83, 83') bewegbar ist.

8. Verfahren nach einem der Ansprüche 1 bis 7, **dadurch gekennzeichnet, dass** ein vorzugsweise dem ersten Anschlag (84) zugeordneter Sensor (91) vorgesehen ist, der erfasst, ob das Bauteil (63) sich in seiner Endposition (87, 87') befindet.

9. Verfahren nach einem der Ansprüche 2 bis 8, **dadurch gekennzeichnet, dass** dem zweiten Anschlag (85) ein Sensor (92) zugeordnet ist, der eine Abstandsänderung zwischen dem Gestellteil (83, 83') und dem Bauteil (63) erfasst.

10. Verfahren nach einem der Ansprüche 1 bis 9, **dadurch gekennzeichnet, dass** die Antriebseinheit (62) einen Motor (64, 95), vorzugsweise einen Elektro- oder Schrittmotor, aufweist, der derart mit dem Bauteil (63) gekoppelt ist, dass beim Drehen des Motors (64, 95) das Bauteil (63) längs der Bewegungsbahn (72, 94) verfahren wird, und wobei eine Überwachungsvorrichtung (75) vorgesehen ist, die die Drehung des Motors (64, 95) und/oder die Bewegung des Bauteils (63) erfasst.

11. Verfahren nach Anspruch 10, **dadurch gekennzeichnet, dass** das Bauteil (63) über das Drehen des Motors (95) eine Drehbewegung längs einer kreisförmigen Bewegungsbahn (94) ausübt.

12. Verfahren nach Anspruch 10, **dadurch gekennzeichnet, dass** die Antriebseinheit (62) eine von dem Motor (64) angetriebene Kugelgewindespindel (67) aufweist, auf der eine Spindelmutter (68) sitzt, die mit dem Bauteil (63) derart verbunden ist, dass das Bauteil (63) beim Verdrehen der Kugelgewindespindel (67) mittels des Motors (64) längs der Kugelgewindespindel (67) einer linearen Bewegungsbahn (72) folgt.

13. Verfahren nach Anspruch 12, **dadurch gekennzeichnet, dass** die Überwachungseinrichtung (75) die Drehung der Kugelgewindespindel (67) erfasst.

14. Verfahren nach Anspruch 12 oder 13, **dadurch gekennzeichnet, dass** die Kugelgewindespindel (67) mit ihrer Drehachse (70) vertikal ausgerichtet ist und das Bauteil (63) vertikal nach oben oder unten verfahren wird.

15. Verfahren nach Anspruch 14, **dadurch gekennzeichnet, dass** die Kugelgewindespindel (67) vertikal unterhalb des Motors (64) angeordnet ist.

16. Verfahren nach einem der Ansprüche 1 bis 15, **dadurch gekennzeichnet, dass** das Bauteil (63) eine vertikal ausgerichtete Werkzeugspindel (26) mit einer Spindelaufnahme (28) zum Einspannen eines Bearbeitungswerkzeugs (30) umfasst.

## Claims

1. A method for operating a machine, in particular a machine tool (10) for machining workpieces (42), the machine comprising a machine frame (22), at least one component part (63), which can be traversed along a movement path (72, 94) by means of a power-operated drive unit (62), at least one frame part (83, 83'), which is connected to the machine frame (22), and which is arranged at an end position (87, 87') in the movement path (72, 94) of the component part (63), and at least one first stop (84), via which the component part (63), being in the end position (87, 87'), is in contact with the frame part (22),
wherein a machine controller (46) is configured to control the drive unit (62) in such a way that
a) the component part (63) is traversed into the end position (87, 87') by means of the drive unit (62), where it rests against the frame part (83, 83') via the first stop (84), **characterized in that**
b) a force continues to be exerted on the component part (63) by means of the drive unit (62), pushing it in the direction of the frame part (83, 83'),
and **in that** the machine controller (46) is further configured to
c) detect whether a further movement of the component part (63) and/or in the drive unit (62) takes place, and
d) output a fault message (80) if a movement is detected in step c).

2. The method as claimed in claim 1, **characterized in that** the machine comprises at least a second stop (85) that is located between the component part (63) and the frame part (83, 83'), at least when the component part (63) is in the end position (87, 87'), and **in that** both stops (84, 85) are configured in such a way that, when the component part (63) is in the end position (87, 87'), it is in contact with the frame part (83, 83') only via the first (84) of the two stops (84, 85).

3. The method as claimed in claim 1 or 2, **characterized in that** the first stop (84) lies outside the movement path (72, 94).

4. The method as claimed in any one of claims 1 to 3, **characterized in that** at least one stop (84, 85) is arranged on the component part (63).

5. The method as claimed in any one of claims 1 to 3, **characterized in that** at least one stop (84, 85) is arranged on the frame part (83, 83').

6. The method as claimed in claim 2 or 3, **characterized in that** both stops (84, 85) are arranged on the component part (63) or on the frame part (83, 83').

7. The method as claimed in any one of claims 1 to 3, **characterized in that** at least one stop (84, 85) is arranged on a holder (86), which can be moved into the movement path (72, 94) between the component part (63) and the frame part (83, 83').

8. The method as claimed in any one of claims 1 to 7, **characterized in that** a sensor (91) is provided, which is preferably associated with the first stop (84), and which detects whether the component part (63) is in its end position (87, 87').

9. The method as claimed in any one of claims 2 to 8, **characterized in that** a sensor (92), which detects a change in the spacing between the frame part (83, 83') and the component part (63), is associated with the second stop (85).

10. The method as claimed in any one of claims 1 to 9, **characterized in that** the drive unit (62) comprises a motor (64, 95), preferably an electric or stepping motor, which is coupled to the component part (63) in such a way that, when the motor (64, 95) rotates, the component part (63) is traversed along the movement path (72, 94), and wherein a monitoring device (75) is provided, which detects the rotation of the motor (64, 95) and/or the movement of the component part (63).

11. The method as claimed in claim 10, **characterized in that** the component part (63) performs a rotary movement along a circular movement path (94) due to the rotation of the motor (95).

12. The method as claimed in claim 10, **characterized in that** the drive unit (62) comprises a ball screw (67), which is driven by the motor (64) and on which a spindle nut (68) is seated, which is connected to the component part (63) in such a way that the component part (63) follows a linear movement path (72) along the ball screw (67) when the ball screw (67) is rotated by means of the motor (64).

13. The method as claimed in claim 12, **characterized in that** the monitoring device (75) detects the rotation of the ball screw (67).

14. The method as claimed in claim 12 or 13, **characterized in that** the axis of rotation (70) of the ball screw (67) is aligned vertically and the component part (63) is traversed vertically upward or downward.

15. The method as claimed in claim 14, **characterized in that** the ball screw (67) is arranged vertically below the motor (64).

16. The method as claimed in any one of claims 1 to 15, **characterized in that** the component part (63) comprises a vertically aligned tool spindle (26) having a spindle holder (28) for clamping a machining tool (30).

## Revendications

1. Procédé de fonctionnement d'une machine, en particulier d'une machine-outil (10) destinée à l'usinage de pièces (42), la machine comportant un bâti de machine (22), au moins un composant (63) qui peut être déplacé le long d'une trajectoire de déplacement (72, 94) au moyen d'une unité d'entraînement (62) actionnée par une force extérieure, au moins une partie de bâti (83, 83') qui est reliée au bâti de machine (22) et qui est disposé à une position d'extrémité (87, 87') sur la trajectoire de déplacement (72, 94) du composant (63) et au moins une première butée (84) par le biais de laquelle le composant (63) située à la position d'extrémité (87, 87') se trouve en contact avec la partie de bâti (22),
une commande de machine (46) étant conçue pour commander l'unité d'entraînement (62) de manière à ce que
a) le composant (63) est déplacé jusque dans la position d'extrémité (87, 87') au moyen de l'unité d'entraînement (62), ledit composant s'appuyant sur la partie de bâti (83, 83') par le biais de la première butée (84), **caractérisé en ce que**
b) l'unité d'entraînement (62) exerce en outre sur le composant (63) une force qui pousse celui-ci en direction de la partie de bâti (83, 83'),
et **en ce que** la commande de machine (46) est en outre conçue pour
c) détecter si un mouvement supplémentaire du composant (63) et/ou de l'unité d'entraînement (62) est effectué, et
d) délivrer un message d'erreur (80) si un mouvement est détecté à l'étape c).

2. Procédé selon la revendication 1, **caractérisé en ce que** la machine comporte au moins une deuxième butée (85) qui se trouve entre le composant (63) et la partie de bâti (83, 83') lorsque le composant (63) est située à la position d'extrémité (87, 87') et **en ce que** les deux butées (84, 85) sont conçues de manière à ce que le composant (63) située à position d'extrémité (87, 87') ne puisse être en contact avec la partie de bâti (83, 83') que par le biais de la première (84) des deux butées (84, 85).

3. Procédé selon la revendication 1 ou 2, **caractérisé en ce que** la première butée (84) est à l'extérieur de la trajectoire de déplacement (72, 94).

4. Procédé selon l'une des revendications 1 à 3, **caractérisé en ce qu'**au moins une butée (84, 85) est disposée sur le composant (63).

5. Procédé selon l'une des revendications 1 à 3, **caractérisé en ce qu'**au moins une butée (84, 85) est disposée sur la partie de bâti (83, 83').

6. Procédé selon la revendication 2 ou 3, **caractérisé en ce que** les deux butées (84, 85) sont disposées sur le composant (63) ou sur la partie de bâti (83, 83').

7. Procédé selon l'une des revendications 1 à 3, **caractérisé en ce que** au moins une butée (84, 85) est disposée sur un support (86) qui peut être déplacé sur la trajectoire de déplacement (72, 94) entre le composant (63) et la partie de bâti (83, 83').

8. Procédé selon l'une des revendications 1 à 7, **caractérisé en ce qu'**un capteur (91) est prévu, qui est associé de préférence à la première butée (84), et détecte si le composant (63) est dans sa position d'extrémité (87, 87').

9. Procédé selon l'une des revendications 2 à 8, **caractérisé en ce qu'**un capteur (92), qui détecte une variation de distance entre la partie de bâti (83, 83') et le composant (63), est associé à la deuxième butée (85).

10. Procédé selon l'une des revendications 1 à 9, **caractérisé en ce que** l'unité d'entraînement (62) comporte un moteur (64, 95), de préférence un moteur électrique ou un moteur pas à pas, qui est accouplé au composant (63) de manière à ce que, lors de la rotation du moteur (64, 95), le composant (63) est déplacé le long de la trajectoire de déplacement (72, 94), et un dispositif de surveillance (75) étant prévu qui détecte la rotation du moteur (64, 95) et/ou le mouvement du composant (63).

11. Procédé selon la revendication 10, **caractérisé en ce que** le composant (63) effectue un mouvement de rotation suivant une trajectoire de déplacement circulaire (94) par rotation du moteur (95).

12. Procédé selon la revendication 10, **caractérisé en ce que** l'unité d'entraînement (62) comporte une broche filetée à billes (67) qui est entraînée par le moteur (64) et sur laquelle siège un écrou de broche (68) qui est relié au composant (63) de manière à ce que le composant (63) suive une trajectoire de déplacement linéaire (72) le long de la broche filetée à billes (67) lorsque la broche filetée à billes (67) est entraînée en rotation au moyen du moteur (64).

13. Procédé selon la revendication 12, **caractérisé en ce que** le dispositif de surveillance (75) détecte la rotation de la broche filetée à billes (67).

14. Procédé selon la revendication 12 ou 13, **caractérisé en ce que** la broche filetée à billes (67) a son axe de rotation (70) qui est orienté verticalement et le composant (63) est déplacé verticalement vers le haut ou vers le bas.

15. Procédé selon la revendication 14, **caractérisé en ce que** la broche filetée à billes (67) est disposée verticalement au-dessous du moteur (64).

16. Procédé selon l'une des revendications 1 à 15, **caractérisé en ce que** le composant (63) comprend une broche porte-outil (26) qui est orientée verticalement et qui est pourvue d'un logement de broche (28) destiné à serrer un outil d'usinage (30).
